# EUROPEAN PATENT SPECIFICATION

(11) **EP 3 716 671 B1**
(45) Date of publication and mention of the grant of the patent: **25.08.2021**
(21) Application number: 19764625.0
(22) Date of filing: 17.01.2019
(51) Int. Cl.: H04W 12/06, H04W 4/80, G06Q 20/32, H04L 29/06, G06Q 20/20

(54) **PAYMENT ASSISTANCE METHODS AND DEVICES**
ZAHLUNGSASSISTENZVERFAHREN UND VORRICHTUNGEN
PROCÉDÉS ET DISPOSITIFS D'AIDE AU PAIEMENT

(30) Priority: 06.03.2018 CN 201810182099
(43) Date of publication of application: 30.09.2020
(73) Proprietor: Advanced New Technologies Co., Ltd., George Town, Grand Cayman KY1-9008 (KY)
(72) Inventor: SUN, Jiankang, Hangzhou, Zhejiang 311121 (CN); QIN, Yao, Hangzhou, Zhejiang 311121 (CN); WANG, Linqing, Hangzhou, Zhejiang 311121 (CN)
(74) Representative: Goddar, Heinz J.
(86) International application number: PCT/CN2019/072082
(87) International publication number: WO 2019/169958

(56) References cited:
- CN-A- 104 021 472
- CN-A- 104 813 348
- CN-A- 105 793 881
- CN-A- 108 566 641
- US-A1- 2014 067 571
- US-A1- 2016 012 422

## Description

### TECHNICAL FIELD

The present specification relates to the field of computer software technologies, and in particular, to payment assistance methods, apparatuses, and devices.

### BACKGROUND

Popularization of smartphones brings convenience to people's lives. Various services can be correspondingly performed by using various applications on the smartphones, and many services relate to payment.

In a current real-world mobile payment scenario, a user often needs to find a collection quick response (QR) code of a merchant, and then scan the collection QR code by using a smartphone, to obtain a collection account of the merchant, and then perform a payment.

Based on the existing technology, a more convenient payment solution is needed.
US 2016/0012422 A1 (Chitilian et al.) discloses techniques to conduct hands-free transactions involving a server at a payment processing system, a user computing device, and a merchant computing device. The payment processing system receives a communication from a hands-free payment application on a user device, the communication comprising a transaction token, an identification of a user account, and a beacon identifier. In an example, the beacon identifier is an identifier requested by the merchant computing device from the payment processing system that is broadcast in a beacon by the merchant computing device to the user device via a wireless communication. Upon verification of the transaction token by the payment processing system, the token is transmitted by the payment processing system to the merchant computing device to allow a hand-free transaction to be initiated by the merchant computing device.

### SUMMARY

According to aspects of the present invention there is provided payment assistance methods and devices as defined in the accompanying claims. Some exemplary implementations of the present specification provide payment assistance methods, apparatuses, and devices, to alleviate the following technical problem: A more convenient payment solution is needed.

To alleviate the previous technical problem, the implementations of the present specification are implemented as follows:

An implementation of the present specification provides a payment assistance method, including: obtaining, by a user end, a merchant account identifier sent by a merchant end through short-range wireless communication; generating verification information, and sending the verification information and the merchant account identifier to a server; receiving the verification information that is obtained from the server and that is sent by the merchant end through short-range wireless communication; and after verification on the received verification information succeeds, determining that a merchant account corresponding to the merchant account identifier is a payment receiving object, so as to perform a payment.

An implementation of the present specification provides another payment assistance method, including: sending, by a merchant end, a merchant account identifier through short-range wireless communication, so that a user end receives the merchant account identifier; receiving verification information delivered by a server based on the merchant account identifier sent by the user end, where the verification information is generated by the user end; and sending the verification information through short-range wireless communication, so that the user end receives the verification information and determines, after verification on the verification information succeeds, that a merchant account corresponding to the merchant account identifier is a payment receiving object.

An implementation of the present specification provides still another payment assistance method, including: allocating, by a server, a merchant account identifier to a merchant end, so that the merchant end sends the merchant account identifier through short-range wireless communication; receiving verification information and the merchant account identifier that are sent by a user end, where the merchant account identifier is obtained from the merchant end; and after verification on the received merchant account identifier succeeds, correspondingly delivering the verification information to the merchant end based on the merchant account identifier, so that the user end performs verification on the merchant end.

An implementation of the present specification provides a payment assistance apparatus, where the apparatus is used as a user end, and includes: an acquisition module, configured to obtain a merchant account identifier sent by a merchant end through short-range wireless communication; a sending module, configured to generate verification information, and send the verification information and the merchant account identifier to a server; a receiving module, configured to receive the verification information that is obtained from the server and that is sent by the merchant end through short-range wireless communication; and a determining module, configured to: after verification on the received verification information succeeds, determine that a merchant account corresponding to the merchant account identifier is a payment receiving object, so as to perform a payment.

An implementation of the present specification provides another payment assistance apparatus, where the apparatus is used as a merchant end, and includes: a first sending module, configured to send a merchant account identifier through short-range wireless communication, so that a user end receives the merchant account identifier; a receiving module, configured to receive verification information delivered by a server based on the merchant account identifier sent by the user end, where the verification information is generated by the user end; and a second sending module, configured to send the verification information through short-range wireless communication, so that the user end receives the verification information and determines, after verification on the verification information succeeds, that a merchant account corresponding to the merchant account identifier is a payment receiving obj ect.

An implementation of the present specification provides yet another payment assistance apparatus, where the apparatus is used as a server, and includes: an allocation module, configured to allocate a merchant account identifier to a merchant end, so that the merchant end sends the merchant account identifier through short-range wireless communication; a receiving module, configured to receive verification information and the merchant account identifier that are sent by a user end, where the merchant account identifier is obtained from the merchant end; and a sending module, configured to: after verification on the received merchant account identifier succeeds, correspondingly deliver the verification information to the merchant end based on the merchant account identifier, so that the user end performs verification on the merchant end.

An implementation of the present specification provides a payment assistance device, where the device is used as a user end, and includes: at least one processor; and at least one memory coupled with the at least one processor, where the memory stores an instruction that can be executed by the at least one processor, and the instruction is executed by the at least one processor to enable the at least one processor to: obtain a merchant account identifier sent by a merchant end through short-range wireless communication; generate verification information, and send the verification information and the merchant account identifier to a server; receive the verification information that is obtained from the server and that is sent by the merchant end through short-range wireless communication; and after verification on the received verification information succeeds, determine that a merchant account corresponding to the merchant account identifier is a payment receiving object, so as to perform a payment.

An implementation of the present specification provides a payment assistance device, where the device is used as a merchant end, and includes: at least one processor; and at least one memory coupled with the at least one processor, where the memory stores an instruction that can be executed by the at least one processor, and the instruction is executed by the at least one processor to enable the at least one processor to: send a merchant account identifier through short-range wireless communication, so that a user end receives the merchant account identifier; receive verification information delivered by a server based on the merchant account identifier sent by the user end, where the verification information is generated by the user end; and send the verification information through short-range wireless communication, so that the user end receives the verification information and determines, after verification on the verification information succeeds, that a merchant account corresponding to the merchant account identifier is a payment receiving obj ect.

An implementation of the present specification provides a payment assistance device, where the device is used as a server, and includes: at least one processor; and at least one memory coupled with the at least one processor, where the memory stores an instruction that can be executed by the at least one processor, and the instruction is executed by the at least one processor to enable the at least one processor to: allocate a merchant account identifier to a merchant end, so that the merchant end sends the merchant account identifier through short-range wireless communication; receive verification information and the merchant account identifier that are sent by a user end, where the merchant account identifier is obtained from the merchant end; and after verification on the received merchant account identifier succeeds, correspondingly deliver the verification information to the merchant end based on the merchant account identifier, so that the user end performs verification on the merchant end.

The previous at least one technical solution used in the implementations of the present specification can achieve the following beneficial effects: When a user needs to perform real-world payment after consuming at a merchant, the user does not need to determine a payment receiving object through code scanning. Instead, a user end can automatically determine the payment receiving object through short-range wireless communication and multi-end interactive identity verification, so that the user can conveniently perform a payment. This payment method can simplify user operations and has better convenience.

### BRIEF DESCRIPTION OF DRAWINGS

To describe the technical solutions in the implementations of the present specification or in the existing technology more clearly, the following briefly describes the accompanying drawings needed for describing the implementations or the existing technology. Clearly, the accompanying drawings in the following descriptions merely show some implementations of the present specification, and a person of ordinary skill in the art can still derive other drawings from these accompanying drawings without creative efforts.
FIG. 1 is a schematic diagram illustrating an overall architecture of the solutions in the present specification in an actual application scenario;
FIG. 2 is a schematic diagram illustrating a process of a payment assistance method from a perspective of a user end, according to an implementation of the present specification;
FIG. 3 is a schematic diagram illustrating a process of a payment assistance method from a perspective of a merchant end, according to an implementation of the present specification;
FIG. 4 is a schematic diagram illustrating a process of a payment assistance method from a perspective of a server, according to an implementation of the present specification;
FIG. 5 is a schematic diagram illustrating a multi-end interaction process of a payment assistance method in an actual application scenario, according to an implementation of the present specification;
FIG. 6 is a schematic structural diagram illustrating a payment assistance apparatus corresponding to FIG. 2, according to an implementation of the present specification;
FIG. 7 is a schematic structural diagram illustrating a payment assistance apparatus corresponding to FIG. 3, according to an implementation of the present specification;
FIG. 8 is a schematic structural diagram illustrating a payment assistance apparatus corresponding to FIG. 4, according to an implementation of the present specification.

### DESCRIPTION OF IMPLEMENTATIONS

Implementations of the present specification provide payment assistance methods, apparatuses, and devices.

To make a person skilled in the art better understand the technical solutions in the present specification, the following clearly and comprehensively describes the technical solutions in the implementations of the present specification with reference to the accompanying drawings in the implementations of the present specification. Clearly, the described implementations are merely some rather than all of the implementations of the present application. All other implementations obtained by a person of ordinary skill in the art based on the implementations of the present specification without creative efforts shall fall within the protection scope of the present application.

In the implementations of the present specification, a user end can automatically determine a payment receiving object through short-range wireless communication and multi-end interactive identity verification. Therefore, a user does not need to perform complex operations such as searching for and scanning a QR code for payment, so that the user can have better experience.

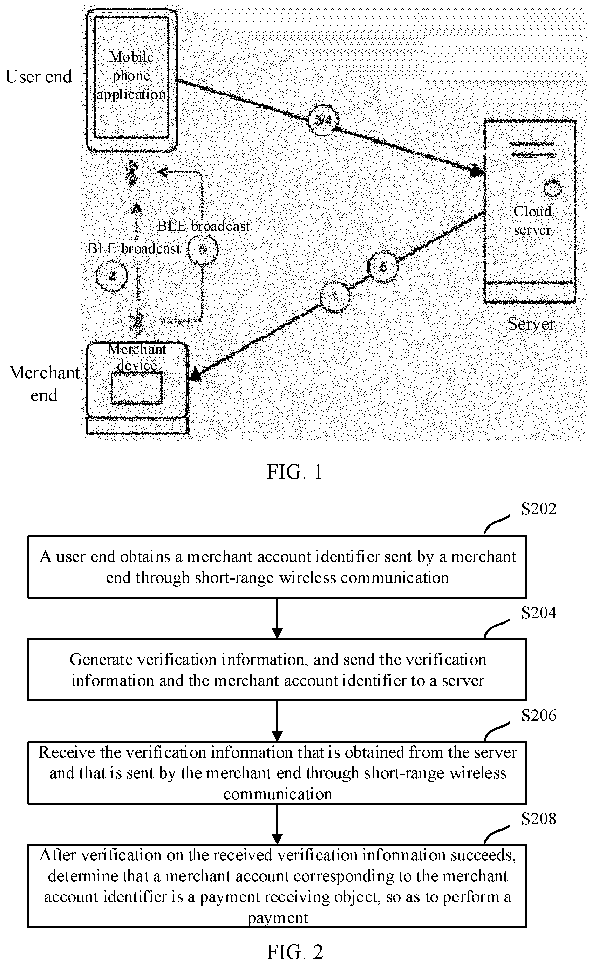

FIG. 1 is a schematic diagram illustrating an overall architecture of the solutions in the present specification in an actual application scenario. The overall architecture mainly relates to three ends: a user end, a merchant end, and a server. From a perspective of device, the three ends are respectively, for example, a mobile device (such as a smartphone), a merchant device, a cloud server of a payment platform, etc. From a perspective of program, the three ends are respectively, for example, a mobile phone application, a cash register program, a server program, etc.

When a user needs to perform real-world payment after consuming at a merchant, the user does not need to determine a payment receiving object through code scanning. The merchant end can obtain a merchant account identifier allocated by the server, and send the merchant account identifier through short-range wireless communication such as a Bluetooth Low Energy (BLE) broadcast. The user end can receive the merchant account identifier and generate verification information, and send the merchant account identifier and the verification information to the server. The server delivers the verification information to the corresponding merchant end based on the merchant account identifier. Then, the merchant end sends the verification information through short-range wireless communication. The user end receives the verification information, and verifies the verification information to determine whether the verification information is pre-generated by the user end. If the verification information is pre-generated by the user end, the user end can determine that a merchant account corresponding to the merchant account identifier is a payment receiving object, so as to perform a payment. In addition, to improve security, information exchanged in the process can have a timeout timestamp, and the process is normally performed only within a time validity range; otherwise, the process fails to be performed.

The following separately describes the solutions in the present specification from perspectives of three ends.

FIG. 2 is a schematic diagram illustrating a process of a payment assistance method from a perspective of a user end, according to an implementation of the present specification. The process can be executed automatically in a timely way, or can be executed based on simple operation trigger (such as one-click trigger or fingerprint scanning trigger) of a user. If needed, the user can be allowed to intervene in the execution process to improve fault tolerance. The process shown in FIG. 2 can include the following steps.

S202. The user end obtains a merchant account identifier sent by a merchant end through short-range wireless communication.

In this implementation of the present specification, a corresponding merchant account can be determined based on the merchant account identifier. The merchant account identifier can be information with a smaller data volume that is generated based on the merchant account, or can be the merchant account. The merchant account is a collection account used by a current merchant to receive money from a user, and can be a third-party payment account, a bank account, etc.

In this implementation of the present specification, the merchant account identifier can be generated by a server and allocated by the server to the merchant end for use, or can be generated by the merchant end and used after the merchant account identifier is recorded in the server.

In this implementation of the present specification, performing sending through short-range wireless communication can be specifically performing sending through a BLE broadcast. The BLE technology is a low-cost, short-range, interoperable, and robust wireless technology that operates in the unlicensed 2.4 GHz Industrial Scientific Medical (ISM) radio frequency band. The BLE technology is initially designed as an ultra-low power consumption wireless technology in which many intelligent methods are used to maximally reduce power consumption. For a real-world mobile payment scenario, the BLE technology can improve operation convenience and reliability, has lower energy consumption needs for a user end and a merchant end, and has better applicability.

When the merchant end sends the merchant account identifier through a BLE broadcast, because a receiver is not specified, the user end needs to actively listen on the BLE broadcast, and obtain the merchant account identifier of the merchant end from a BLE broadcast packet obtained from the listening. In addition, in some places where merchants are dense, a user end may simultaneously listen on multiple BLE broadcasts of different merchant ends. In this case, a BLE broadcast with the strongest signal strength can be preferably selected for further processing; or information about the multiple BLE broadcasts can be displayed to the user end, so that a user can confirm information with a current merchant to alleviate misoperation.

In this implementation of the present specification, the short-range wireless communication is not limited to only the BLE broadcast. For example, the short-range wireless communication can be acoustic communication, infrared communication, or near field communication (NFC). During implementation, a suitable short-range wireless communication method can be selected based on actual conditions.

S204. Generate verification information, and send the verification information and the merchant account identifier to the server.

In this implementation of the present specification, after generating the verification information, the user end can determine, through three-end interaction, whether the merchant account corresponding to the merchant account identifier obtained in step S202 indeed belongs to the merchant end in step S202. The verification information is used in a similar way to a short message verification code, and is used to verify the identity of the merchant end.

There can be multiple forms of verification information, and the verification information is not specifically limited here. The verification information is, for example, a sequence number, a digest, or a verification code. In the following implementations, the sequence number is mainly used as an example for description.

S206. Receive the verification information that is obtained from the server and that is sent by the merchant end through short-range wireless communication.

In this implementation of the present specification, after receiving the verification information and the merchant account identifier that are sent by the user end, the server determines the corresponding merchant end based on the merchant account identifier, and delivers the verification information to the merchant end. In this process, if the merchant end does not send the merchant account identifier of the merchant end in step S202, the merchant end subsequently cannot receive the verification information, and therefore the merchant end cannot verify the identity of the merchant end to the user end. On the contrary, if the merchant end normally sends the merchant account identifier of the merchant end in step S202, the merchant end subsequently can receive the verification information delivered by the server, and therefore the merchant end can verify the identity of the merchant end to the user end, and a payment process can be normally performed.

S208. After verification on the received verification information succeeds, determine that the merchant account corresponding to the merchant account identifier is a payment receiving object, so as to perform a payment.

In this implementation of the present specification, the verification process in step S208 is similar to a verification process of a short message verification code. A difference is that the short message verification code is usually verified by a server and is used by the server to verify the identity of a user end, and the verification information here is verified by the user end and is used by the user end to verify the identity of the merchant end.

In this implementation of the present specification, the payment receiving object can be displayed to the user after the payment receiving object is determined, and the payment process is continued after the user confirms the payment receiving object. How to perform the subsequent payment process is not limited in the present application, and the objective of the solutions of the present specification has been achieved provided that the payment receiving object is conveniently determined.

According to the method in FIG. 2, when a user needs to perform real-world payment after consuming at a merchant, the user does not need to determine a payment receiving object through code scanning. Instead, a user end can automatically determine the payment receiving object through short-range wireless communication and multi-end interactive identity verification, so that the user can conveniently perform a payment. This payment method can simplify user operations and has better convenience.

Based on the method in FIG. 2, this implementation of the present specification further provides some specific implementation solutions of the method and an extension solution, which are described below.

In this implementation of the present specification, as mentioned above, the verification information can be a sequence number for verification. In this case, for step S204, the generating verification information can include generating the sequence number for verification based on a user account of the user end. The user account is a user payment account. Certainly, generating the verification information based on the user account is an example. Alternatively, the verification information can be generated based on other appropriate information (such as a current time and other personal information of the user), provided that the verification information can be successfully verified by the user end.

In this implementation of the present specification, some information exchanged in the previous process can have time validity, that is, the information is valid only within a time validity range, and the information is invalid beyond the time validity range, and then may cause a process execution failure. As such, information security can be improved, and risks brought by possible information disclosure can be alleviated.

For example, the information includes the merchant account identifier sent by the merchant end and the verification information sent by the user end. The merchant account identifier and the verification information can each have a timeout timestamp. The timeout timestamp is usually correspondingly generated when information corresponding to the timeout timestamp is generated, and can indicate that a time range within which the information corresponding to the timeout timestamp is valid or a time range beyond which the information corresponding to the timeout timestamp is invalid. If needed, each end that subsequently handles the information can perform time validity verification based on the timeout timestamp to determine whether to continue to normally perform the process. The timeout timestamp can be included in the information corresponding to the timeout timestamp for transmission, or the timeout timestamp and the information corresponding to the timeout timestamp can be jointly or separately transmitted as two independent parts. In the following some implementations, joint transmission in the latter case is used as an example.

In this implementation of the present specification, for step S208, that the verification on the received verification information succeeds can include: determining that the received verification information is consistent with the locally pre-generated verification information, and determining, based on a timeout timestamp, that the received verification information has not expired.

The above describes the payment assistance method from the perspective of the user end. The following continues to provide description from other perspectives. For some content, no repeated description is provided, and references can be made to the previous content for understanding.

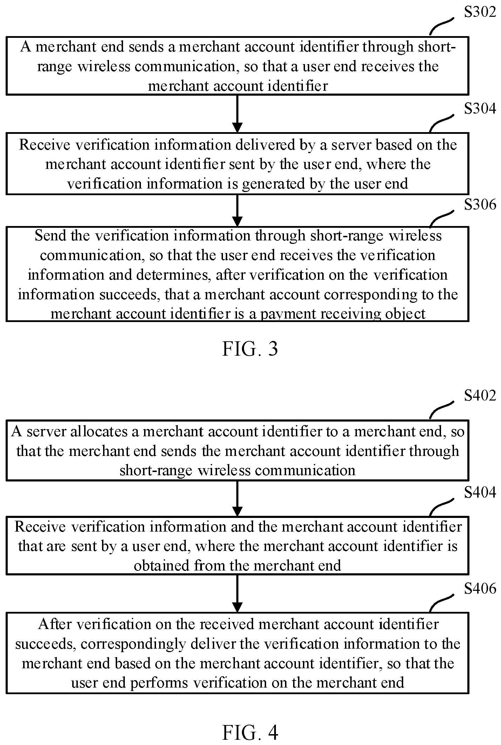

Based on the same idea, an implementation of the present specification further provides a schematic diagram illustrating a process of a payment assistance method from a perspective of a merchant end, as shown in FIG. 3. The process shown in FIG. 3 can include the following steps.

S302. The merchant end sends a merchant account identifier through short-range wireless communication, so that a user end receives the merchant account identifier.

S304. Receive verification information delivered by a server based on the merchant account identifier sent by the user end, where the verification information is generated by the user end.

S306. Send the verification information through short-range wireless communication, so that the user end receives the verification information and determines, after verification on the verification information succeeds, that a merchant account corresponding to the merchant account identifier is a payment receiving obj ect.

In this implementation of the present specification, as mentioned above, the merchant account identifier can be generated by the server. In this case, for step S302, before sending the merchant account identifier through short-range wireless communication, the merchant end can further receive the merchant account identifier allocated by the server to the merchant end. The merchant account identifier sent by the merchant end in step S302 is generated and allocated by the server. Further, when generating the merchant account identifier, the server can further correspondingly generate a timeout timestamp of the merchant account identifier, and allocate the timeout timestamp to the merchant end. Then, the timeout timestamp can be transmitted together with the merchant account identifier.

Based on the same idea, an implementation of the present specification further provides a schematic diagram illustrating a process of a payment assistance method from a perspective of a server, as shown in FIG. 4. The process shown in FIG. 4 can include the following steps.

S402. The server allocates a merchant account identifier to a merchant end, so that the merchant end sends the merchant account identifier through short-range wireless communication.

S404. Receive verification information and the merchant account identifier that are sent by a user end, where the merchant account identifier is obtained from the merchant end.

S406. After verification on the received merchant account identifier succeeds, correspondingly deliver the verification information to the merchant end based on the merchant account identifier, so that the user end performs verification on the merchant end.

In this implementation of the present specification, for step S406, that the verification on the received merchant account identifier succeeds can include: determining that validity verification on the received merchant account identifier succeeds, and determining, based on a timeout timestamp, that the received merchant account identifier has not expired. Here, validity means that the received merchant account identifier is indeed pre-generated by the server and allocated by the server to the merchant end, so that the server can correctly identify and determine the merchant end corresponding to the merchant account identifier, to facilitate delivery of the verification information.

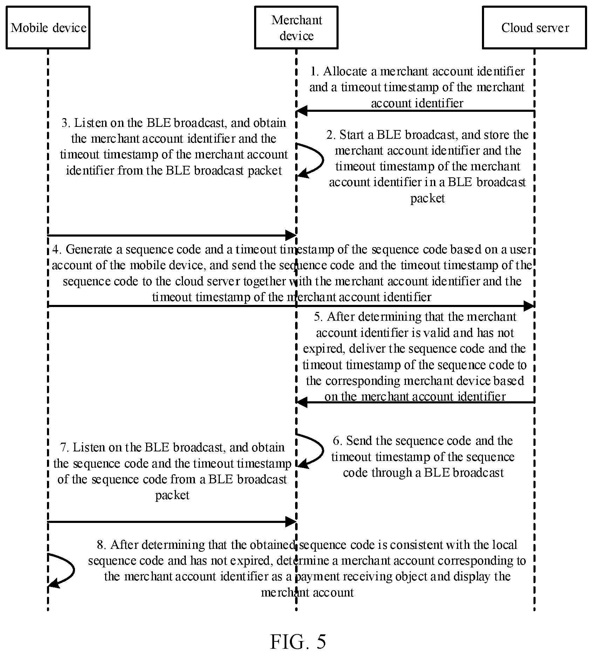

More intuitively, an implementation of the present specification further provides a schematic diagram illustrating a multi-end interaction process of the previous payment assistance method in an actual application scenario. As shown in FIG. 5, in the actual application scenario, the previous user end is specifically a mobile device used by a user, the previous merchant end is specifically a merchant device, and the previous server is specifically a cloud server. The multi-end interaction process is also an example, and the previous payment assistance method is not limited to the multi-end interaction process.

The process shown in FIG. 5 can include the following steps.
1. The cloud server allocates a corresponding merchant account identifier and a timeout timestamp of the merchant account identifier to the merchant device.
2. The merchant device starts a BLE broadcast, and stores the merchant account identifier and the timeout timestamp of the merchant account identifier in a BLE broadcast packet.
3. The mobile device listens on the BLE broadcast, and obtains the merchant account identifier and the timeout timestamp of the merchant account identifier from the BLE broadcast packet.
4. The mobile device generates a sequence code and a timeout timestamp of the sequence code based on a user account corresponding to the mobile device, and sends the sequence code and the timeout timestamp of the sequence code to the cloud server together with the merchant account identifier and the timeout timestamp of the merchant account identifier.
5. The cloud server performs verification, and after determining that the merchant account identifier is valid and has not expired, the cloud server delivers the sequence code and the timeout timestamp of the sequence code to the corresponding merchant device based on the merchant account identifier.
6. The merchant device sends the sequence code and the timeout timestamp of the sequence code through a BLE broadcast.
7. The mobile device listens on the BLE broadcast, and obtains the sequence code and the timeout timestamp of the sequence code from a BLE broadcast packet.
8. The mobile device performs verification, and after determining that the obtained sequence code is consistent with the locally pre-generated sequence code and has not expired, the mobile device determines a merchant account corresponding to the merchant account identifier as a payment receiving object and displays the merchant account.

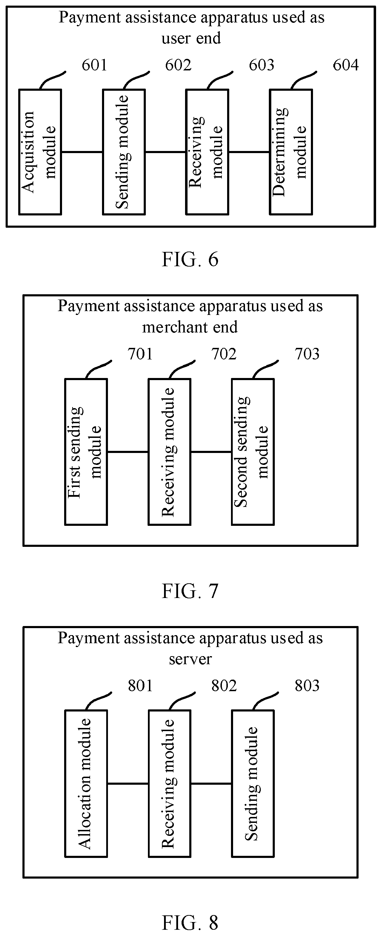

Based on the same idea, the implementations of the present specification further provide apparatuses corresponding to the previous methods, as shown in FIG. 6, FIG. 7, and FIG. 8.

FIG. 6 is a schematic structural diagram illustrating a payment assistance apparatus corresponding to FIG. 2, according to an implementation of the present specification. The apparatus is used as a user end, and the apparatus includes: an acquisition module 601, configured to obtain a merchant account identifier sent by a merchant end through short-range wireless communication; a sending module 602, configured to generate verification information, and send the verification information and the merchant account identifier to a server; a receiving module 603, configured to receive the verification information that is obtained from the server and that is sent by the merchant end through short-range wireless communication; and a determining module 604, configured to: after verification on the received verification information succeeds, determine that a merchant account corresponding to the merchant account identifier is a payment receiving object, so as to perform a payment.

Optionally, performing sending through short-range wireless communication includes: performing sending through a Bluetooth Low Energy (BLE) broadcast.

Optionally, the verification information is a sequence number for verification, and that the sending module 602 generates the verification information includes: generating, by the sending module 602, the sequence number for verification based on a user account of the user end.

Optionally, the merchant account identifier sent by the merchant end and the verification information sent by the user end each have a timeout timestamp for time validity verification.

Optionally, that the determining module 604 determines that the verification on the received verification information succeeds includes: determining, by the determining module 604, that the received verification information is consistent with the locally pre-generated verification information, and determining, based on a timeout timestamp, that the received verification information has not expired.

FIG. 7 is a schematic structural diagram illustrating a payment assistance apparatus corresponding to FIG. 3, according to an implementation of the present specification. The apparatus is used as a merchant end, and the apparatus includes: a first sending module 701, configured to send a merchant account identifier through short-range wireless communication, so that a user end receives the merchant account identifier; a receiving module 702, configured to receive verification information delivered by a server based on the merchant account identifier sent by the user end, where the verification information is generated by the user end; and a second sending module 703, configured to send the verification information through short-range wireless communication, so that the user end receives the verification information and determines, after verification on the verification information succeeds, that a merchant account corresponding to the merchant account identifier is a payment receiving obj ect.

Optionally, performing sending through short-range wireless communication includes: performing sending through a Bluetooth Low Energy (BLE) broadcast.

Optionally, before the first sending module 701 sends the merchant account identifier through short-range wireless communication, the receiving module 702 is further configured to: receive the merchant account identifier allocated by the server to the merchant end.

Optionally, the merchant account identifier sent by the merchant end and the verification information sent by the user end each have a timeout timestamp for time validity verification, and a timeout timestamp of the merchant account identifier sent by the merchant end is pre-generated by the server

FIG. 8 is a schematic structural diagram illustrating a payment assistance apparatus corresponding to FIG. 4, according to an implementation of the present specification. The apparatus is used as a server, and the apparatus includes: an allocation module 801, configured to allocate a merchant account identifier to a merchant end, so that the merchant end sends the merchant account identifier through short-range wireless communication; a receiving module 802, configured to receive verification information and the merchant account identifier that are sent by a user end, where the merchant account identifier is obtained from the merchant end; and a sending module 803, configured to: after verification on the received merchant account identifier succeeds, correspondingly deliver the verification information to the merchant end based on the merchant account identifier, so that the user end performs verification on the merchant end.

Optionally, performing sending through short-range wireless communication includes: performing sending through a Bluetooth Low Energy (BLE) broadcast.

Optionally, the merchant account identifier allocated by the server and the verification information sent by the user end each have a timeout timestamp for time validity verification.

Optionally, that the sending module 803 determines that the verification on the received merchant account identifier succeeds includes: determining, by the sending module 803, that validity verification on the received merchant account identifier succeeds, and determining, based on a timeout timestamp, that the received merchant account identifier has not expired.

Based on the same idea, an implementation of the present specification further provides a payment assistance device corresponding to FIG. 2, and the device is used as a user end, and includes: at least one processor; and at least one memory coupled with the at least one processor, where the memory stores an instruction that can be executed by the at least one processor, and the instruction is executed by the at least one processor to enable the at least one processor to: obtain a merchant account identifier sent by a merchant end through short-range wireless communication; generate verification information, and send the verification information and the merchant account identifier to a server; receive the verification information that is obtained from the server and that is sent by the merchant end through short-range wireless communication; and after verification on the received verification information succeeds, determine that a merchant account corresponding to the merchant account identifier is a payment receiving object, so as to perform a payment.

Based on the same idea, an implementation of the present specification further provides a payment assistance device corresponding to FIG. 3, and the device is used as a merchant end, and includes: at least one processor; and at least one memory coupled with the at least one processor, where the memory stores an instruction that can be executed by the at least one processor, and the instruction is executed by the at least one processor to enable the at least one processor to: send a merchant account identifier through short-range wireless communication, so that a user end receives the merchant account identifier; receive verification information delivered by a server based on the merchant account identifier sent by the user end, where the verification information is generated by the user end; and send the verification information through short-range wireless communication, so that the user end receives the verification information and determines, after verification on the verification information succeeds, that a merchant account corresponding to the merchant account identifier is a payment receiving object.

Based on the same idea, an implementation of the present specification further provides a payment assistance device corresponding to FIG. 4, and the device is used as a server, and includes: at least one processor; and at least one memory coupled with the at least one processor, where the memory stores an instruction that can be executed by the at least one processor, and the instruction is executed by the at least one processor to enable the at least one processor to: allocate a merchant account identifier to a merchant end, so that the merchant end sends the merchant account identifier through short-range wireless communication; receive verification information and the merchant account identifier that are sent by a user end, where the merchant account identifier is obtained from the merchant end; and after verification on the received merchant account identifier succeeds, correspondingly deliver the verification information to the merchant end based on the merchant account identifier, so that the user end performs verification on the merchant end.

Based on the same idea, an implementation of the present specification further provides a nonvolatile computer storage medium corresponding to FIG. 2, where the nonvolatile computer storage medium stores a computer executable instruction, and the computer executable instruction is set to: obtain a merchant account identifier sent by a merchant end through short-range wireless communication; generate verification information, and send the verification information and the merchant account identifier to a server; receive the verification information that is obtained from the server and that is sent by the merchant end through short-range wireless communication; and after verification on the received verification information succeeds, determine that a merchant account corresponding to the merchant account identifier is a payment receiving object, so as to perform a payment.

Based on the same idea, an implementation of the present specification further provides a nonvolatile computer storage medium corresponding to FIG. 3, where the nonvolatile computer storage medium stores a computer executable instruction, and the computer executable instruction is set to: send a merchant account identifier through short-range wireless communication, so that a user end receives the merchant account identifier; receive verification information delivered by a server based on the merchant account identifier sent by the user end, where the verification information is generated by the user end; and send the verification information through short-range wireless communication, so that the user end receives the verification information and determines, after verification on the verification information succeeds, that a merchant account corresponding to the merchant account identifier is a payment receiving object.

Based on the same idea, an implementation of the present specification further provides a nonvolatile computer storage medium corresponding to FIG. 4, where the nonvolatile computer storage medium stores a computer executable instruction, and the computer executable instruction is set to: allocate a merchant account identifier to a merchant end, so that the merchant end sends the merchant account identifier through short-range wireless communication; receive verification information and the merchant account identifier that are sent by a user end, where the merchant account identifier is obtained from the merchant end; and after verification on the received merchant account identifier succeeds, correspondingly deliver the verification information to the merchant end based on the merchant account identifier, so that the user end performs verification on the merchant end.

Specific implementations of the present specification are described above. Other implementations fall within the scope of the appended claims. In some cases, the actions or steps described in the claims can be performed in an order different from the order in the implementations and the desired results can still be achieved. In addition, the process depicted in the accompanying drawings does not necessarily need the shown particular order to achieve the desired results. In some implementations, multi-tasking and parallel processing can be or may be advantageous.

The implementations of the present specification are described in a progressive way. For same or similar parts of the implementations, mutual references can be made to the implementations. Each implementation focuses on a difference from other implementations. Especially, an apparatus implementation, a device implementation, and a nonvolatile computer storage medium implementation are basically similar to a method implementation, and therefore are described briefly. For a related part, references can be made to some descriptions in the method implementation.

The apparatus, the device, and the nonvolatile computer storage medium provided in the implementations of the present specification correspond to the method. Therefore, the apparatus, the device, and the nonvolatile computer storage medium also have similar beneficial technical effects to the corresponding method. The beneficial technical effects of the method has been described above in detail, and therefore the beneficial technical effects of the corresponding apparatus, device, and nonvolatile computer storage medium are omitted here for simplicity.

In the 1990s, whether a technical improvement is a hardware improvement (for example, an improvement to circuit structures, such as a diode, a transistor, or a switch) or a software improvement (an improvement to a method process) can be clearly distinguished. However, as technologies develop, current improvements to many method processes can be considered as direct improvements to hardware circuit structures. Almost all designers program an improved method process into a hardware circuit, to obtain a corresponding hardware circuit structure. Therefore, a method process can be improved by using a hardware entity module. For example, a programmable logic device (PLD) (for example, a field programmable gate array (FPGA)) is such an integrated circuit, and a logical function of the PLD is determined by a user through device programming. A designer performs programming to "integrate" a digital system into a single PLD, without requiring a chip manufacturer to design and manufacture a dedicated integrated circuit chip. In addition, at present, instead of manually manufacturing an integrated circuit chip, this type of programming is mostly implemented by using "logic compiler" software. The "logic compiler" software is similar to a software compiler used to develop and write a program. Original code needs to be written in a particular programming language before compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The Very-High-Speed Integrated Circuit Hardware Description Language (VHDL) and Verilog are most commonly used at present. A person skilled in the art should also understand that a hardware circuit that implements a logical method process can be readily obtained provided that the method process is logically programmed by using several of the previous hardware description languages and is programmed into an integrated circuit.

A controller can be implemented by using any appropriate method. For example, the controller can be in a form of a microprocessor or a processor, or a computer readable medium that stores computer readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. The memory controller can also be implemented as a part of control logic of the memory. A person skilled in the art also knows that, in addition to implementing the controller by using only the computer readable program code, method steps can be logically programmed to allow the controller to implement the same function in a form of a logic gate, a switch, an ASIC, a programmable logic controller, or a built-in microcontroller. Therefore, the controller can be considered as a hardware component, and an apparatus that is included in the controller and configured to implement various functions can also be considered as a structure in the hardware component. Alternatively, the apparatus configured to implement various functions can even be considered as both a software module implementing the method and a structure in the hardware component.

The system, apparatus, module, or unit illustrated in the previous implementations can be specifically implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, when the previous apparatus is described, the previous apparatus is divided into various units based on functions for separate description. Certainly, when the present specification is implemented, functions of the units can be implemented in one or more pieces of software and/or hardware.

A person skilled in the art should understand that an implementation of the present specification can be provided as a method, a system, or a computer program product. Therefore, the implementations of the present specification can use a form of hardware only implementations, software only implementations, or implementations with a combination of software and hardware. In addition, the implementations of the present specification can use a form of a computer program product that is implemented on one or more computer-usable storage media (including but not limited to a magnetic disk memory, a CD-ROM, an optical memory, etc.) that include computer-usable program code.

The present specification is described with reference to the flowcharts and/or block diagrams of the method, the device (system), and the computer program product according to the implementations of the present specification. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

Alternatively, these computer program instructions can be stored in a computer readable memory that can instruct a computer or another programmable data processing device to work in a specific way, so that the instructions stored in the computer readable memory generate an artifact that includes an instruction apparatus. The instruction apparatus implements a specific function in one or more processes in the flowcharts and/or in one or more blocks in the block diagrams.

Alternatively, these computer program instructions can be loaded onto a computer or another programmable data processing device, so that a series of operations and steps are performed on the computer or another programmable device, thereby generating computer-implemented processing. Therefore, the instructions executed on the computer or another programmable device provide steps for implementing a specific function in one or more processes in the flowcharts and/or in one or more blocks in the block diagrams.

In a typical configuration, a computing device includes one or more processors (CPUs), input/output interfaces, network interfaces, and memories.

The memory may include a non-persistent memory, a random access memory (RAM), a nonvolatile memory, and/or another form in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, or a magnetic tape/magnetic disk storage or another magnetic storage device, or any other non-transmission medium. The computer storage medium can be configured to store information accessible to a computing device. Based on the definition in the present specification, the computer readable medium does not include computer readable transitory media such as a modulated data signal and carrier.

It is worthwhile to further note that, the terms "include" and "comprise" or their any other variants are intended to cover a non-exclusive inclusion, so that a process, method, product, or device that includes a list of elements not only includes those elements but also includes other elements that are not expressly listed, or further includes elements inherent to such process, method, product, or device. Without more constraints, an element preceded by "includes a ..." does not preclude the existence of additional identical elements in the process, method, product, or device that includes the element.

A person skilled in the art should understand that an implementation of the present specification can be provided as a method, a system, or a computer program product. Therefore, the present specification can use a form of hardware only implementations, software only implementations, or implementations with a combination of software and hardware. In addition, the present specification can use a form of a computer program product that is implemented on one or more computer-usable storage media (including but not limited to a magnetic disk memory, a CD-ROM, an optical memory, etc.) that include computer-usable program code.

The present specification can be described in the general context of computer executable instructions, for example, a program module. Generally, the program module includes a routine, a program, an object, a component, a data structure, etc. executing a specific task or implementing a specific abstract data type. The present specification can alternatively be practiced in distributed computing environments in which tasks are performed by remote processing devices that are connected through a communications network. In a distributed computing environment, the program module can be located in both local and remote computer storage media including storage devices.

The implementations of the present specification are described in a progressive way. For same or similar parts of the implementations, mutual references can be made to the implementations. Each implementation focuses on a difference from other implementations. Especially, a system implementation is basically similar to a method implementation, and therefore is described briefly. For a related part, references can be made to some descriptions in the method implementation.

The previous descriptions are merely implementations of the present specification, and are not intended to limit the present invention which is defined by the claims in the present application.

## Claims

1. A payment assistance method performed by a mobile device, comprising:
obtaining (S202) a merchant account identifier sent by a merchant device through short-range wireless communication;
generating (S204) verification information to provide pre-generated verification information, and sending the pre-generated verification information and the merchant account identifier to a server;
determining (S208) that a merchant account corresponding to the merchant account identifier is a payment receiving object so as to perform a payment, comprising receiving (S206) a verification information received from the merchant device through short-range wireless communication and successfully verifying that the verification information received from the merchant device is consistent with the pre-generated verification information, wherein the verification information received from the merchant device corresponds to the pre-generated verification information that the server delivered to the merchant device upon successful verification of the merchant account identifier; and
determining the merchant account corresponding to the merchant account identifier to perform the payment.

2. The method according to claim 1, wherein the merchant account identifier obtained from the merchant device and the verification information received from the merchant device are received through Bluetooth Low Energy, BLE, broadcasts.

3. The method according to claim 1, wherein the verification information is a sequence number for verification, and the generating verification information comprises:
generating the sequence number for verification based on a user account of the user end.

4. The method according to claim 1, wherein the merchant account identifier sent by the merchant end and the pre-generated verification information each have a timeout timestamp for time validity verification.

5. The method according to claim 4, wherein determining that a merchant account corresponding to the merchant account identifier is a payment receiving object so as to perform a payment comprises:
successfully verifying that the verification information received from the merchant device is consistent with the pre-generated verification information and determining, based on a timeout timestamp, that the verification information received from the merchant device has not expired.

6. A payment assistance method, comprising:
sending (S302), by a merchant device, a merchant account identifier through short-range wireless communication to a mobile device for a payment process;
receiving (S304), by a merchant device, verification information from a server upon successful verification of the merchant account identifier by the server, wherein the verification information is pre-generated verification information generated by the mobile device; and
sending (S306), by a merchant device, the verification information through short-range wireless communication to the mobile device for the mobile device to determine that a merchant account corresponding to the merchant account identifier is a payment receiving object using the verification information received from the merchant device.

7. The method according to claim 6, wherein performing sending through short-range wireless communication comprises:
performing sending through a Bluetooth Low Energy, BLE, broadcast.

8. The method according to claim 6, wherein before the sending a merchant account identifier through short-range wireless communication, the method further comprises:
receiving the merchant account identifier allocated by the server to the merchant end,
wherein the merchant account identifier sent by the merchant end and the pre-generated verification information each have a timeout timestamp for time validity verification, and a timeout timestamp of the merchant account identifier sent by the merchant end is pre-generated by the server.

9. A payment assistance method, comprising:
allocating (S402), by a server, a merchant account identifier to a merchant device, so that the merchant device can send the merchant account identifier through short-range wireless communication for a payment process;
receiving (S404), by the server, verification information and the merchant account identifier from a mobile device, the merchant account identifier obtained by the mobile device from the merchant device, wherein the verification information is pre-generated verification information generated by the mobile device; and
after verification on the received merchant account identifier succeeds, correspondingly delivering (S406), by the server, the verification information to the merchant device, the verification information to be sent by the merchant device to the mobile device through short-range wireless communication for the mobile device to determine that a merchant account corresponding to the merchant account identifier is a payment receiving object using the verification information received from the merchant end.

10. The method according to claim 9, wherein a short-range wireless communication comprises a Bluetooth Low Energy (BLE) broadcast.

11. The method according to claim 9, wherein the merchant account identifier allocated by the server and the pre-generated verification information each have a timeout timestamp for time validity verification.

12. The method according to claim 9, wherein that the verification on the received merchant account identifier succeeds comprises:
determining that validity verification on the received merchant account identifier succeeds, and determining, based on a timeout timestamp, that the received merchant account identifier has not expired.

13. A mobile device comprising:
at least one processor; and
at least one memory coupled with the at least one processor, wherein
the memory stores an instruction that can be executed by the at least one processor, and the instruction is executed by the at least one processor to enable the at least one processor to perform a method according to any one of the claims 1 to 5.

14. A merchant device comprising:
at least one processor; and
at least one memory coupled with the at least one processor, wherein
the memory stores an instruction that can be executed by the at least one processor, and the instruction is executed by the at least one processor to enable the at least one processor to perform the steps performed by the merchant device in a method according to any one of the claims 6 to 8.

15. A server comprising:
at least one processor; and
at least one memory coupled with the at least one processor, wherein
the memory stores an instruction that can be executed by the at least one processor, and the instruction is executed by the at least one processor to enable the at least one processor to perform the steps performed by the server in a method according to any one of the claims 9 to 12.

## Patentansprüche

1. Zahlungsassistenzverfahren, das durch ein mobiles Gerät durchgeführt wird, umfassend:
Erhalten (S202) einer Händlerkontokennung, die durch ein Händlergerät durch eine drahtlose Kurzstreckenkommunikation gesendet wird;
Generieren (S204) von Verifizierungsinformationen, um vorgenerierte Verifizierungsinformationen bereitzustellen, und Senden der vorgenerierten Verifizierungsinformationen und der Händlerkontokennung an einen Server;
Bestimmen (S208), dass ein mit der Händlerkontokennung korrespondierendes Händlerkonto ein Zahlungsempfangsobjekt ist, um eine Zahlung durchzuführen, umfassend Empfangen (S206) von Verifizierungsinformationen, die vom Händlergerät durch eine drahtlose Kurzstreckenkommunikation empfangen werden, und erfolgreiches Verifizieren, dass die vom Händlergerät empfangenen Verifizierungsinformationen mit den vorgenerierten Verifizierungsinformationen übereinstimmen, wobei die vom Händlergerät empfangenen Verifizierungsinformationen mit den vorgenerierten Verifizierungsinformationen, die der Server nach einer erfolgreichen Verifizierung der Händlerkontokennung an das Händlergerät übermittelt hat, korrespondieren; und
Bestimmen des mit der Händlerkontokennung korrespondierenden Händlerkontos, um die Zahlung durchzuführen.

2. Verfahren nach Anspruch 1, wobei die vom Händlergerät erhaltene Händlerkontokennung und die vom Händlergerät empfangenen Verifizierungsinformationen durch Bluetooth Low Energy, BLE, -Übertragungen empfangen werden.

3. Verfahren nach Anspruch 1, wobei die Verifizierungsinformationen eine Sequenznummer zur Verifizierung sind und das Generieren von Verifizierungsinformationen Folgendes umfasst:
Generieren der Sequenznummer zur Verifizierung basierend auf einem Benutzerkonto des Benutzerendes.

4. Verfahren nach Anspruch 1, wobei die durch das Händlerende gesendete Händlerkontokennung und die vorgenerierten Verifizierungsinformationen je einen Timeout-Zeitstempel zur Verifizierung der zeitlichen Gültigkeit aufweisen.

5. Verfahren nach Anspruch 4, wobei das Bestimmen, dass ein mit der Händlerkontokennung korrespondierendes Händlerkonto ein Zahlungsempfangsobjekt ist, um eine Zahlung durchzuführen, Folgendes umfasst:
erfolgreiches Verifizieren, dass die vom Händlergerät empfangenen Verifizierungsinformationen mit den vorgenerierten Verifizierungsinformationen übereinstimmen, und Bestimmen basierend auf einem Timeout-Zeitstempel, dass die vom Händlergerät empfangenen Verifizierungsinformationen noch nicht abgelaufen sind.

6. Zahlungsassistenzverfahren, umfassend:
Senden (S302) einer Händlerkontokennung durch ein Händlergerät durch eine drahtlose Kurzstreckenkommunikation an ein mobiles Gerät für einen Zahlungsvorgang;
Empfangen (S304) von Verifizierungsinformationen durch ein Händlergerät von einem Server nach einer erfolgreichen Verifizierung der Händlerkontokennung durch den Server, wobei es sich bei den Verifizierungsinformationen um vorgenerierte Verifizierungsinformationen, die durch das mobile Gerät generiert werden, handelt; und
Senden (S306) der Verifizierungsinformationen durch ein Händlergerät durch eine drahtlose Kurzstreckenkommunikation an das mobile Gerät, damit das mobile Gerät unter Nutzung der vom Händlergerät empfangenen Verifizierungsinformationen bestimmen kann, dass ein mit der Händlerkontokennung korrespondierendes Händlerkonto ein Zahlungsempfangsobjekt ist.

7. Verfahren nach Anspruch 6, wobei das Durchführen des Sendens durch eine drahtlose Kurzstreckenkommunikation Folgendes umfasst:
Durchführen des Sendens durch eine Bluetooth Low Energy, BLE,-Übertragung.

8. Verfahren nach Anspruch 6, wobei das Verfahren vor dem Senden einer Händlerkontokennung durch eine drahtlose Kurzstreckenkommunikation ferner Folgendes umfasst:
Empfangen der Händlerkontokennung, die dem Händlerende durch den Server zugewiesen wird;
wobei die durch das Händlerende gesendete Händlerkontokennung und die vorgenerierten Verifizierungsinformationen je einen Timeout-Zeitstempel zur Verifizierung der zeitlichen Gültigkeit aufweisen und ein Timeout-Zeitstempel der durch das Händlerende gesendeten Händlerkontokennung durch den Server vorgeneriert wird.

9. Zahlungsassistenzverfahren, umfassend:
Zuweisen (S402) einer Händlerkontokennung durch einen Server zu einem Händlergerät, damit das Händlergerät die Händlerkontokennung durch eine drahtlose Kurzstreckenkommunikation für einen Zahlungsvorgang senden kann;
Empfangen (S404) von Verifizierungsinformationen und der Händlerkontokennung durch den Server von einem mobilen Gerät, wobei die Händlerkontokennung durch das mobile Gerät vom Händlergerät erhalten wird, wobei es sich bei den Verifizierungsinformationen um vorgenerierte Verifizierungsinformationen, die durch das mobile Gerät generiert werden, handelt; und,
nachdem die Verifizierung der empfangenen Händlerkontokennung erfolgreich gewesen ist, korrespondierendes Übermitteln (S406) der Verifizierungsinformationen durch den Server an das Händlergerät, wobei die Verifizierungsinformationen durch das Händlergerät durch eine drahtlose Kurzstreckenkommunikation an das mobile Gerät zu senden sind, damit das mobile Gerät unter Nutzung der vom Händlerende empfangenen Verifizierungsinformationen bestimmen kann, dass ein mit der Händlerkontokennung korrespondierendes Händlerkonto ein Zahlungsempfangsobjekt ist.

10. Verfahren nach Anspruch 9, wobei eine drahtlose Kurzstreckenkommunikation eine Bluetooth Low Energy, BLE,-Übertragung umfasst.

11. Verfahren nach Anspruch 9, wobei die durch den Server zugewiesene Händlerkontokennung und die vorgenerierten Verifizierungsinformationen je einen Timeout-Zeitstempel zur Verifizierung der zeitlichen Gültigkeit aufweisen.

12. Verfahren nach Anspruch 9, wobei eine erfolgreiche Verifizierung der empfangenen Händlerkontokennung Folgendes umfasst:
Bestimmen, dass eine Gültigkeitsverifizierung der empfangenen Händlerkontokennung erfolgreich ist, und Bestimmen basierend auf einem Timeout-Zeitstempel, dass die empfangene Händlerkontokennung noch nicht abgelaufen ist.

13. Mobiles Gerät, umfassend:
mindestens einen Prozessor; und
mindestens einen Speicher, der mit dem mindestens einen Prozessor gekoppelt ist, wobei der Speicher eine Anweisung, die durch den mindestens einen Prozessor ausgeführt werden kann, speichert und die Anweisung durch den mindestens einen Prozessor ausgeführt wird, um zu ermöglichen, dass der mindestens eine Prozessor ein Verfahren nach einem der Ansprüche 1 bis 5 durchführt.

14. Händlergerät, umfassend:
mindestens einen Prozessor; und
mindestens einen Speicher, der mit dem mindestens einen Prozessor gekoppelt ist, wobei der Speicher eine Anweisung, die durch den mindestens einen Prozessor ausgeführt werden kann, speichert und die Anweisung durch den mindestens einen Prozessor ausgeführt wird, um zu ermöglichen, dass der mindestens eine Prozessor die Schritte durchführt, die durch das Händlergerät bei einem Verfahren nach einem der Ansprüche 6 bis 8 durchgeführt werden.

15. Server, umfassend:
mindestens einen Prozessor; und
mindestens einen Speicher, der mit dem mindestens einen Prozessor gekoppelt ist, wobei der Speicher eine Anweisung, die durch den mindestens einen Prozessor ausgeführt werden kann, speichert und die Anweisung durch den mindestens einen Prozessor ausgeführt wird, um zu ermöglichen, dass der mindestens eine Prozessor die Schritte durchführt, die durch den Server bei einem Verfahren nach einem der Ansprüche 9 bis 12 durchgeführt werden.

## Revendications

1. Procédé d'aide au paiement mis en œuvre par un dispositif mobile, comprenant :
l'obtention (S202) d'un identifiant de compte commerçant envoyé par un dispositif commerçant par l'intermédiaire d'une communication sans fil à courte portée ;
la génération (S204) d'informations de vérification pour fournir des informations de vérification générées à l'avance, et l'envoi des informations de vérification générées à l'avance et de l'identifiant de compte commerçant à un serveur ;
la détermination (S208) du fait qu'un compte commerçant correspondant à l'identifiant de compte commerçant est un objet de réception de paiement de manière à effectuer un paiement, comprenant la réception (S206) d'informations de vérification reçues en provenance du dispositif commerçant par l'intermédiaire d'une communication sans fil à courte portée et la vérification réussie du fait que les informations de vérification reçues en provenance du dispositif commerçant sont en accord avec les informations de vérification générées à l'avance, dans lequel les informations de vérification reçues en provenance du dispositif commerçant correspondent aux informations de vérification générées à l'avance que le serveur a fournies au dispositif commerçant lors de la vérification réussie de l'identifiant de compte commerçant ; et
la détermination du compte commerçant correspondant à l'identifiant de compte commerçant pour effectuer le paiement.

2. Procédé selon la revendication 1, dans lequel l'identifiant de compte commerçant obtenu en provenance du dispositif commerçant et les informations de vérification reçues en provenance du dispositif commerçant sont reçus par l'intermédiaire de diffusions Bluetooth Basse Énergie, BLE.

3. Procédé selon la revendication 1, dans lequel les informations de vérification sont un numéro de séquence pour la vérification, et la génération d'informations de vérification comprend :
la génération du numéro de séquence pour la vérification sur la base d'un compte utilisateur de l'extrémité utilisateur.

4. Procédé selon la revendication 1, dans lequel l'identifiant de compte commerçant envoyé par l'extrémité commerçant et les informations de vérification générées à l'avance ont chacun une estampille temporelle de temps limite pour la vérification de la validité temporelle.

5. Procédé selon la revendication 4, dans lequel la détermination du fait qu'un compte commerçant correspondant à l'identifiant de compte commerçant est un objet de réception de paiement afin d'effectuer un paiement comprend :
la vérification réussie du fait que les informations de vérification reçues en provenance du dispositif commerçant sont en accord avec les informations de vérification générées à l'avance et la détermination, sur la base d'une estampille temporelle de temps limite, que les informations de vérification reçues en provenance du dispositif commerçant n'ont pas expiré.

6. Procédé d'aide au paiement, comprenant :
l'envoi (S302), par un dispositif commerçant, d'un identifiant de compte commerçant par l'intermédiaire d'une communication sans fil à courte portée à un dispositif mobile en vue d'un processus de paiement ;
la réception (S304), par un dispositif commerçant, d'informations de vérification en provenance d'un serveur lors d'une vérification réussie de l'identifiant de compte commerçant par le serveur, dans lequel les informations de vérification sont des informations de vérification générées à l'avance ayant été générées par le dispositif mobile ; et
l'envoi (S306), par un dispositif commerçant, des informations de vérification par l'intermédiaire d'une communication sans fil à courte portée au dispositif mobile pour que le dispositif mobile détermine qu'un compte commerçant correspondant à l'identifiant de compte commerçant est un objet de réception de paiement en utilisant les informations de vérification reçues en provenance du dispositif commerçant.

7. Procédé selon la revendication 6, dans lequel la réalisation d'un envoi par l'intermédiaire d'une communication sans fil à courte portée comprend :
la réalisation d'un envoi par l'intermédiaire d'une diffusion Bluetooth Basse Énergie, BLE.

8. Procédé selon la revendication 6, dans lequel, avant l'envoi d'un identifiant de compte commerçant par l'intermédiaire d'une communication sans fil à courte portée, le procédé comprend en outre :
la réception de l'identifiant de compte commerçant attribué par le serveur à l'extrémité commerçant,
dans lequel l'identifiant de compte commerçant envoyé par l'extrémité commerçant et les informations de vérification générées à l'avance présentent chacun une estampille temporelle de temps limite pour la vérification de la validité temporelle, et une estampille temporelle de temps limite de l'identifiant de compte commerçant envoyé par l'extrémité commerçant est générée à l'avance par le serveur.

9. Procédé d'aide au paiement, comprenant :
l'attribution (S402), par un serveur, d'un identifiant de compte commerçant à un dispositif commerçant, de manière à ce que le dispositif commerçant puisse envoyer l'identifiant de compte commerçant par l'intermédiaire d'une communication sans fil à courte portée en vue d'un processus de paiement ;
la réception (S404), par le serveur, d'informations de vérification et de l'identifiant de compte commerçant en provenance d'un dispositif mobile, l'identifiant de compte commerçant étant obtenu par le dispositif mobile en provenance du dispositif commerçant, dans lequel les informations de vérification sont des informations de vérification générées à l'avance ayant été générées par le dispositif mobile ; et
après que la vérification de l'identifiant de compte commerçant reçu a réussi, la fourniture correspondante (S406), par le serveur, des informations de vérification au dispositif commerçant, les informations de vérification devant être envoyées par le dispositif commerçant au dispositif mobile par l'intermédiaire d'une communication sans fil à courte portée pour que le dispositif mobile détermine qu'un compte commerçant correspondant à l'identifiant de compte commerçant est un objet de réception de paiement en utilisant les informations de vérification reçues en provenance de l'extrémité commerçant.

10. Procédé selon la revendication 9, dans lequel une communication sans fil à courte portée comprend une diffusion Bluetooth Basse Énergie (BLE).

11. Procédé selon la revendication 9, dans lequel l'identifiant de compte commerçant attribué par le serveur et les informations de vérification générées à l'avance présentent chacun un estampille temporelle de temps limite pour la vérification de la validité temporelle.

12. Procédé selon la revendication 9, dans lequel le fait que la vérification de l'identifiant de compte commerçant reçu réussit comprend :
la détermination du fait que la vérification de validité de l'identifiant de compte commerçant reçu réussit, et la détermination, sur la base d'une estampille temporelle de temps limite, du fait que l'identifiant de compte commerçant reçu n'a pas expiré.

13. Dispositif mobile comprenant :
au moins un processeur ; et
au moins une mémoire couplée audit au moins un processeur, dans lequel la mémoire stocke une instruction qui peut être exécutée par ledit au moins un processeur, et l'instruction est exécutée par ledit au moins un processeur pour permettre audit au moins un processeur de mettre en œuvre un procédé selon l'une quelconque des revendications 1 à 5.

14. Dispositif commerçant comprenant :
au moins un processeur ; et
au moins une mémoire couplée audit au moins un processeur, dans lequel la mémoire stocke une instruction qui peut être exécutée par ledit au moins un processeur, et l'instruction est exécutée par ledit au moins un processeur pour permettre audit au moins un processeur de mettre en œuvre les étapes exécutées par le dispositif commerçant dans un procédé selon l'une quelconque des revendications 6 à 8.

15. Serveur comprenant :
au moins un processeur ; et
au moins une mémoire couplée audit au moins un processeur, dans lequel la mémoire stocke une instruction qui peut être exécutée par ledit au moins un processeur, et l'instruction est exécutée par ledit au moins un processeur pour permettre audit au moins un processeur de mettre en œuvre les étapes exécutées par le serveur dans un procédé selon l'une quelconque des revendications 9 à 12.
